# EUROPEAN PATENT APPLICATION

(11) **EP 2 939 985 A1**
(43) Date of publication of application: **04.11.2015**
(21) Application number: 15001252.4
(22) Date of filing: 02.11.2012
(51) Int. Cl.: C02F 5/10, C02F 1/68

(54) **ANTI-SCALE WATER TREATMENT MEDIUM**

(30) Priority: 16.11.2011 US 201113298286
(62) Divisional of application: 12850069.1
(71) Applicant: EcoWater Systems, LLC, Woodbury, MN 55125 (US)
(72) Inventor: Vermurlen, Jeff, Inver Grove Heights, MN 55077 (US); Brigano, Frank A., Northford, CT 06472 (US); Schroeder, John H., Mount Laurel, NJ 08054 (US)
(74) Representative: Zeitler Volpert Kandlbinder Patent- und Rechtsanwälte Partnerschaft mbB

(57) **Abstract**

This invention relates to a transforming media in the form of a transforming granular composition, comprising:a combination of about 5-97% by weight of a transforming agent that directs the crystallization of calcium carbonate into aragonite form in flowing water, the transforming agent having a solubility in water of about 0.1 to about 50 mg/L; and about 3-95% by weight of a binding agent; and optionally an additive; wherein the composition has a calculated bulk density (grams transforming agent/cc transforming granule) of at least 6% that of the bulk density of the transforming agent; and wherein at least 50% of transforming agent particles in the transforming granules have an average particle size of about 1 micrometer to about 5000 micrometer.

## Description

### BACKGROUND OF THE INVENTION

### 1. Field of the Invention:

This invention relates to an anti-scale water treatment system and method. The system suppresses hard scale formation in water systems by releasing small amounts of transforming agent into water in a water system. The transforming agent directs crystallization of calcium carbonate in the water into aragonite form.

### 2. Background of the Invention:

Water from naturally-occurring sources may include a variety of minerals and substances such as calcium carbonate (CaCO₃) and magnesium carbonate. The solubility of CaCO₃ in water decreases with increasing temperature, so where water is heated by a water heater or simply enters a warm building from cool outdoor pipes, CaCO₃ may crystallize into "calcite" (also known as limestone).

Calcite is dense and blocky and can integrate metals such as iron, magnesium and manganese into its crystalline structure, forming hard scale by depositing for instance on the interiors of pipes and other plumbing fixtures, water heaters, showerheads, dishwashers, and other surfaces in systems that transport or use water (water systems). The inclusion of other metals typically gives hard scale an orange-brown color. Hard scale adheres strongly to surfaces and is difficult to remove. Hard scale deposits and build-up can create a number of problems, including reducing water heater life spans, leaking at water system joints, and restricting water flow for instance by altering and narrowing pipe interiors and clogging water system components.

One way to control hard scale and its effects is to physically remove the scale, such as with acid or phosphate treatments. Another approach is to seed flowing water with calcite nanocrystals. The calcite nanocrystals serve as nucleation sites to induce crystals to grow within the flowing water stream and not on plumbing surfaces. Other devices attempt to prevent hard scale deposition by removing minerals that contribute to hard scale with ion exchange resin. However, all of these treatments have their own difficulties. For instance, ion exchange resins are typically regenerated with salt, so that large volumes of salt usage are required.

Another approach to suppressing hard scale buildup is to direct CaCO₃ into a less common crystalline form called "aragonite". Aragonite has a thin, brittle, needle-like morphology, and does not tend to incorporate metals into its crystalline matrix. Aragonite scale, also called "soft scale", is characterized by a pure white, soft or fluffy appearance and is easier to mechanically remove from a surface than hard scale, for instance by scrubbing or by a flowing stream of water. Soft scale does not deposit in water systems as readily or tenaciously as hard scale. Directing scale formation toward aragonite suppresses hard scale buildup by allowing a significant component of water hardness to pass through a water system without forming hard scale.

Some scale suppression devices use zinc to direct the crystallization of CaCO₃ into aragonite. "Zinc anode" devices operate as galvanic cells between 2 metals of different electronegativity: a sacrificial anode (zinc), and a protected cathode (such as copper pipes). In use, zinc anode devices release zinc into a hard water stream, to direct calcium carbonate into aragonite form. However, zinc anode systems have significant issues in use. The amount of zinc released may vary greatly depending on the composition, pH and temperature of the water and on how large a "cathode" is present in the form of (often copper) piping that the anode maintains electrical contact with. Zinc release may be too low to provide effective anti-scale properties or too high to be safe for ingestion. Water contaminants such as H₂S aggressively react with copper, causing rapid sacrifice of the zinc anode. Also, keeping a multi-kilogram electrode in electrical contact with a house's plumbing system can be problematic. Lead is also commonly present with zinc as a contaminant, and may be released into water treated by zinc anode devices, perhaps in significant amounts.

An anti-scale water treatment system (also, "anti-scale system") that directs aragonite formation without these difficulties is a desirable solution to problems with hard scale. Such a system will preferably provide a safe, economical, and simple solution to problems with available anti-scale systems.

### Brief Summary of the Invention

The present invention is directed in part to an anti-scale water treatment system for suppressing hard scale formation in water systems and devices exposed to flowing water. The anti-scale water treatment system comprises a water inlet, a water outlet, and an anti-scale transforming media ("transforming media") between the water inlet and the water outlet. The transforming media comprises a combination of about 5-97% by weight of a transforming agent having low solubility in water, and about 3-95% by weight of a binding agent. Optionally, the transforming media comprises an additive. In use, source water (water to undergo anti-scale treatment according to the present invention) flows through the water inlet, then through the transforming media, and finally through the water outlet, to rejoin water in a water system or proceed to a water system or end use device.

The present invention is also directed to a transforming media, for instance in granular, block or fibrous form, or combinations thereof. The transforming agent's low solubility in water avoids the release of excess transforming agent into flowing water, and allows for slow, equilibrium-based release by the transforming media as water flows through the transforming media. Preferably, the transforming agent is zinc oxide (ZnO) or strontium carbonate (SrCO₃). The transforming media of this invention is static, convenient to use, long-lasting, economical to make, and more dependable, less variable for instance than zinc anode systems in the presence of copper pipes or water having a high H₂S content. In a preferred embodiment, transforming media granules of this invention have a high volumetric density, contributing to its durability and long-lasting nature. Methods for making and using a system of the present invention are also part of the present invention.

### Brief Description of the Several Views of the Drawings

Figure 1 shows scanning electron micrographs (SEMs) of calcite and of aragonite.
Figure 2 shows an Energy dispersive X-ray Spectroscopy (EDX) analysis of calcite, aragonite, hard scale and other substances.
Figure 3 shows XRD patterns for ZnO powder and 80%/20% by weight ZnO/NaSiO₂ granules.
Figure 4 shows data from anti-scale water testing of various state of the art systems and media of the present invention.
Figure 5 shows SEM photomicrographs of ZnO granules before and after exposure to flowing water, at 5,000x magnification.
Figure 6 shows SEM photomicrographs (both 5,000X at 5.0 kV) of hard scale taken from a showerhead exposed to flowing water, without (top) and with (bottom) treatment according to the present invention.
Figure 7 shows illustrations (left; upper right) of a tank and a cartridge that may be used in the present invention, and a schematic diagram (lower right) of embodiments of the present invention.

### Detailed Description of the Invention

The anti-scale water treatment system described herein is useful for suppressing hard scale formation in water systems, particularly on inner surfaces exposed to flowing water. The components of the system work together for this purpose. Water systems are generally systems that transport or use water, and include plumbing, in whole or in part, such as pipes, pipe joints, water tanks, water heaters, showerheads, dishwashers, humidifiers, industrial water treatment apparatus, heating and/or cooling towers, sprinkler systems, toilets, garden hoses, sprinklers, and other equipment for supplying, storing or circulating water in a building. Buildings that may have water systems include residential, commercial, mixed-use and industrial buildings of all sizes. The invention is preferably safe for treating drinking water and particularly useful in water systems that transport drinking water.

### Aragonite and Calcite

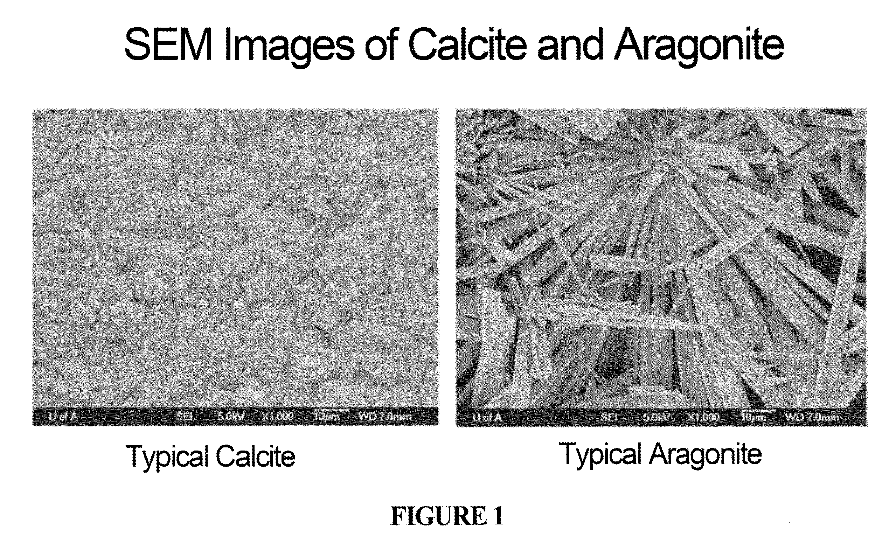

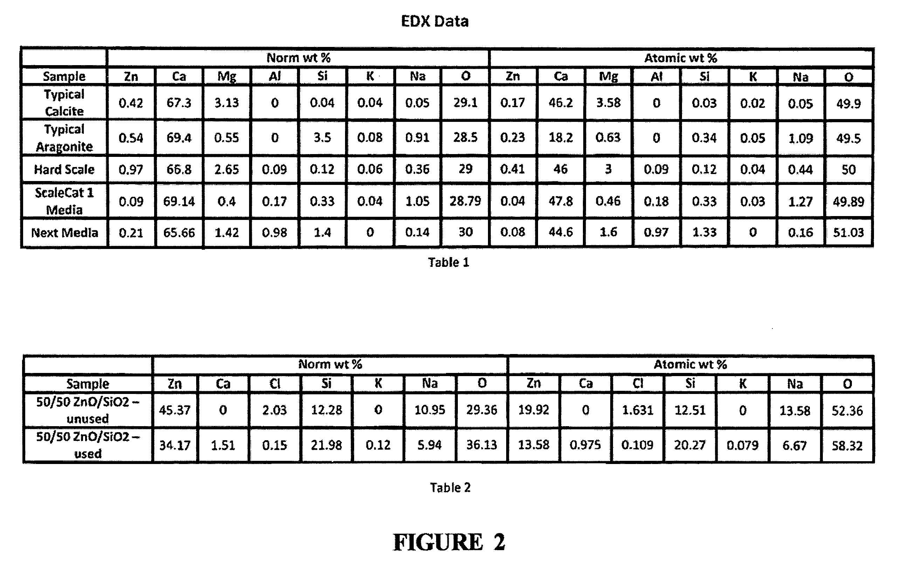

Figure 1 shows scanning electron microscope (SEM) micrographs of two crystalline forms of CaCO₃: calcite (dense, blocky crystals) and aragonite (thin, needle-like crystals). As mentioned above, calcite tends to form orange-brown hard scale, and aragonite forms fluffy, white soft scale. Figure 2 Table 1 shows an EDX analysis of the composition of calcite and aragonite scale, as well as of hard scale taken from a system exposed to running hard water. The magnesium content of hard scale approaches that of calcite, while aragonite has approximately 6 times less magnesium than calcite. Calcite and aragonite also create distinctive X-Ray Diffraction (XRD) patterns (not shown).

### Transforming Agent

A "transforming agent" of the present invention directs the crystallization of CaCO₃ in water into aragonite form, and has low solubility in water. Preferably, at neutral pH (pH 7) a transforming agent is soluble in water in the range of about 0.0001 to about 0.05 g/L, even more preferably from 0.0005 to about 0.03 g/L; even more preferably from about 0.001 to about 0.02 g/L; even more preferably from the solubility of ZnO in water (0.0016 g/L at pH 7, 30°C) to the solubility of SrCO₃ in water (0.011 g/L at pH7, 18°C); and most preferably of about the solubility of ZnO in water (0.0016 g/L) and/or about the solubility of SrCO₃ in water (0.011 g/L). Converted into different units, a transforming agent of the present invention has a solubility in water at pH 7 of about 0.1 to about 50ppm; more preferably from about 0.5 to about 30 ppm; even more preferably from about 1 to about 20 ppm; even more preferably from about 1.6 to about 11 ppm; and most preferably 1.6 and/or 11 ppm. The above ppm ranges are meant to correspond to mg transforming agent/L.

The solubility of a transforming agent of the present invention may vary somewhat with water pH. Preferably, the pH of water to undergo anti-scale treatment by a system of the present invention is about 5.5 to about 8.5, more preferably about 5.5 to about 8.0, even more preferably about 6 to about 8, even more preferably about 6.5 to about 8, and even more preferably about 6.5 to about 7.5. Without being bound by theory, it is noted that the solubility of ZnO and SrCO₃ increases with decreasing pH.

A transforming agent of the present invention preferably, prior to inclusion in a transforming media, has a particle size from about 10 nm to about 2000 um. For instance, the particle size of a transforming agent prior to inclusion in a transforming media may be greater than 180 nm, greater than 2um, or greater than 3 um; and smaller than 500 um, smaller than 100um, or smaller than 50 um. In one preferred embodiment, the average particle size in a group of transforming agent particles prior to inclusion in a transforming media (or addition of other substances) is about 2um-25um. In another preferred embodiment, the average particle size of transforming agent particles prior to inclusion in a transforming media is about 180 nm to about 360 nm.

Preferably, a transforming agent and/or binding agent prior to inclusion in a transforming media of the present invention is at least 90% pure, more preferably at least 95% pure, more preferably at least 98% pure, and most preferably at least 99% pure (where 100% pure represents the presence of a transforming or binding agent with no other substances present, and where 100% represents the upper end of a range beginning with any of the above percentages).

### Zinc Oxide (ZnO) and Strontium Carbonate (SrCO₃)

Preferred transforming agents of the present invention are ZnO and SrCO₃. ZnO has an equilibrium solubility of 1.6 ppm (1.6 mg/L) in water (pH 7, 30°C). The permissible limit for zinc in drinking water is 5 ppm (5 mg/L). SrCO₃ has an equilibrium solubility of about 11ppm (0.011 g/L) in neutral water (pH 7, 18°C).

The use of these transforming agents in the present invention provide an additional benefit over the state of the art in that release of the transforming agents is self-limiting, due to their low solubility in water, and therefore avoids release of unsafe levels of either agent into drinking water. For instance, release of ZnO according to the present invention will not generally exceed 1.6 ppm, unless the water is notably acidic or alkaline. The presence of other substances such as copper will not drive the equilibrium forward, unlike for instance zinc anode systems, which may release too much zinc, particularly in the presence of copper.

These transforming agents may be present alone or in combination with each other in the present invention. Also, either or both of these transforming agents may be present in combination with one or more other transforming agents suitable for the present invention.

### Zinc (Zn), Zinc Sulfide (ZnS) and Zinc Phosphates

Other zinc species such as Zn and ZnS may direct calcium carbonate away from forming calcite and toward forming aragonite. However, Zn and ZnS are too soluble and insoluble, respectively, to be useful in an anti-scale system of this invention. Zn is soluble in water at a concentration of 0.29 g/L (290 ppm, pH 7), and would deplete from a static media such as in the present invention too quickly, potentially resulting in unsafe amounts of zinc in water that may be ingested (>5 ppm). Zinc phosphates are also generally too soluble to act as transforming agents of the present invention, particularly around pH 8, and are not used in the present invention. ZnS is too water-insoluble (5.3 x 10⁻¹⁰ g/L), and does not dose into flowing water in amounts sufficient to provide the anti-scaling effect of the present invention.

### Binding Agent

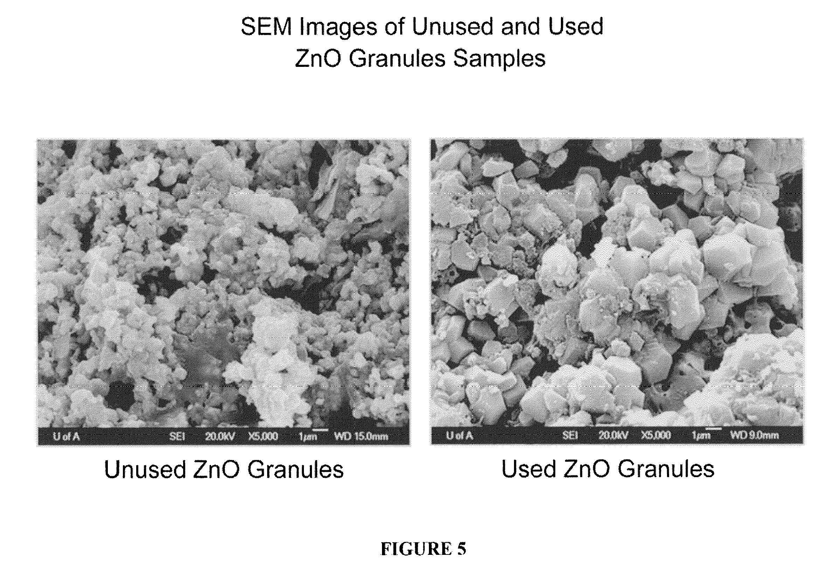

A "binding agent" of the present invention is a substance that makes point contact with a transforming agent, binding the transforming agent and forming a continuous web or matrix, to allow for the slow dissolution and release of the transforming agent into (preferably flowing) water, and to prevent excessive release of the transforming agent into the water, for instance by releasing a large quantity of undissolved transforming agent into the water. The binding agent doesn't blind or substantially alter the aragonite-directing function of the transforming agent when the transforming agent is released into (preferably flowing) water. See for instance Figure 5, showing rock-like crystals of ZnO bound by a silicate. The binding agent may impact ZnO concentration and the degree of scale reduction, as well as other operating factors relevant to the anti-scale water treatment system of this invention.

A binding agent may originally be in the form of a solid such as a solid granule or other solid form that may be ground into solid granule form; as well as a gel, colloid, cement, or other form that allows a binding agent to bind a transforming agent and make a transforming media according to the present invention. A binding agent is preferably porous, increasing the available surface area and potential exposure and release of the bound transforming agent.

As mentioned above, transforming agent release according to the present invention is self-limiting, largely dependent on its solubility in water. When transforming agent and binding agent are combined according to this invention, the binding agent holds the transforming agent in place, exposing the transforming agent to flowing water, allowing dissolution of transforming agent at about 4% to 200% of the expected equilibrium dissolution rate for the transforming agent, depending on e.g. water pH, water temperature, and contact time between water and transforming media/transforming agent. Transforming agent dissolution will tend to increase with decreasing pH, increasing temperature and increasing water contact time. Preferably, transforming agent dissolution will occur at about 10-125% of its equilibrium dissolution rate. Also preferably, transforming agent release according to the present invention may occur at about 20-125%, 30-125%, 40-120%, 50-120%, 60-120%, 70-120%, 80-120%, 90-120%, and 95-120% of the agent's equilibrium solubility in water. These ranges are meant to be exemplary of desirable transforming agent dissolution rates, and not limiting. Lower and upper ends of these ranges are intended as interchangeable with other lower and upper ends, respectively. The same is true for other preferred ranges throughout this application, within their relevant subject and scope.

For instance, ZnO has an equilibrium solubility of 1.6 ppm (1.6 mg/L) in water (pH 7, 30°C), and per the present invention, an equilibrium dissolution rate of 1.6 ppm (1.6 mg/L). ZnO exemplifies release properties desirable in the present invention, however other transforming agents such as SrCO₃ or a mixture of ZnO and SrCO₃ may also be released in amounts at or below their typical solubility level in water. Dissolution of ZnO from a transforming media into flowing water is preferably as indicated above, and in particular preferred at a rate of about 0.05 to about 3.2 mg/L, more preferably about 0.16 to about 2.0 mg/L, more preferably about 1 - 1.8 mg/L, even more preferably about 1.1 to 1.8 mg/L, and most preferably 1.4-1.8 mg/L (where mg/L is considered equivalent to ppm). Also, SrCO₃ has an equilibrium solubility of 11 ppm (11 mg/L). Dissolution of SrCO₃ from a transforming media into flowing water is preferably as indicated above, in particular preferred at a rate of about 0.5 to about 22 mg/L, more preferably about 1.1 to about 16 mg/L, more preferably about 5 to about 14 mg/L, more preferably about 9-11 mg/L. Where a mixture of ZnO and SrCO₃ is in a transforming media of the present invention, the average release of total transforming agent is typically about 3-9 mg/L transforming agent, more preferably about 6-7 mg/L. Dissolution rates may be at a given time point or an average after for instance treatment of media with a given volume of water and/or for a period of time. Where water is not flowing, but rather standing for a short period time, up to overnight, a few days or even weeks or months, the transforming agent's low solubility in water will prevent release of the transforming agent in levels that may be toxic or unhealthy for a given use.

Silica-based substances may serve as binding agents of the invention, preferably a silicate (SiO₂) and more preferably an aluminosilicate; also, useful binding agents of this invention include polymer, including for instance polyvinyl chloride (PVC), polyvinyl alcohol (PVA), polyethylene (high density, low density or mix), polyolefins such as polyethylene homopolymers, acrylic resins, nylons, celluloses, polyvinyl acetate; thermoplastic polymer, thermosetting polymer; substituted cellulose; sodium silicate, calcium silicate, ammonium silicate, potassium silicate, magnesium silicate, colloidal silicate, calcium sulfate, sodium sulfate, polyvinyl pyrrolidone, hydroxyethyl cellulose, latex, cement; blends and copolymers; and clay such as diatomaceous earth. Preferably, a binding agent of this invention is PVC, PVA or polyacrylate. Other binding agents include rayon, polyester, polyolefins, fiberglass.

A more detailed list of binders that may be useful in the present invention include end-capped polyacetals, such as poly(oxymethylene) or polyformaldehyde, poly(trichloroacetaldehyde), poly(n-valeraldehyde), poly(acetaldehyde), and poly(propionaldehyde); acrylic polymers, such as polyacrylamide, poly(acrylic acid), poly(methacrylic acid), poly(ethyl acrylate), and poly(methyl methacrylate); fluorocarbon polymers, such as poly(tetrafluoroethylene), perfluorinated ethylene-propylene copolymers, ethylene-tetrafluoroethylene copolymers, poly(chlorotrifluoroethylene), ethylene-chlorotrifluoroethylene copolymers, poly(vinylidene fluoride), and poly(vinyl fluoride); polyamides, such as poly(6-aminocaproic acid) or poly(e-caprolactam), poly(hexamethylene adipamide), poly(hexamethylene sebacamide), and poly(11-aminoundecanoic acid); polyaramides, such as poly(imino-1,3-phenyleneiminoisophthaloyl) or poly(m-phenylene isophthalamide); parylenes, such as poly-2-xylylene, and poly(chloro-1-xylylene); polyaryl ethers, such as poly(oxy-2,6-dimethyl-1,4-phenylene) or poly(p-phenylene oxide); polyaryl sulfones, such as poly(oxy-1,4-phenylenesulfonyl-1,4-phenyleneoxy-1,4-phenyl-eneisopropylid- ene-1,4-phenylene), and poly(sulfonyl-1,4-phenylene-oxy-1,4-phenylenesulfonyl4,4'-biphenylene); polycarbonates, such as poly-(bisphenol A) or poly(carbonyldioxy-1,4-phenyleneisopropylidene-1,4-phenylene); polyesters, such as poly(ethylene terephthalate), poly(tetramethylene terephthalate), and poly(cyclohexyl-ene-1,4-dimethylene terephthalate) or poly(oxymethylene-1,4-cyclohexylenemethyleneoxyterephthaloyl); polyaryl sulfides, such as poly(p-phenylene sulfide) or poly(thio-1,4-phenylene); polyimides, such as poly(pyromellitimido-1,4-phenylene); polyolefins, such as polyethylene, polypropylene, poly(1-butene), poly(2-butene), poly(1-pentene), poly(2-pentene), poly(3-methyl-1-pentene), and poly(4-methyl-1-pentene); vinyl polymers, such as poly(vinyl acetate), poly(vinylidene chloride), and poly(vinyl chloride); diene polymers, such as 1,2-poly-1,3-butadiene, 1,4-poly-1,3-butadiene, polyisoprene, and polychloroprene; polystyrenes; and copolymers of the foregoing, such as acrylonitrilebutadiene-styrene (ABS) copolymers. Polyolefins that may be useful include polyethylene, linear low density polyethylene, polypropylene, poly(1-butene), poly(2-butene), poly(1-pentene), poly(2-pentene), poly(3-methyl-1-pentene), poly(4-methyl-1-pentene), and the like.

A preferred binding agent of the present invention is alumino-silicate (AlSiO₂). Alumino-silicate compounds may be used in water softening apparatus, acting as ion exchangers to remove hard-scale forming contaminants from water. However, as the AlSiO₂ will eventually become full of e.g. Ca++ ions and associated chemicals, it will gradually lose its capacity to bind Ca++, and need to be recharged with e.g. a salt such as sodium chloride. The present invention does not require recharging with salt, as the exchange capacity of the silicate is not required for the present invention. Preferred silicate binding agents include commercially available aluminosilicate ion exchangers (e.g. sodium, potassium, calcium or magnesium aluminosilicate including for instance bentonite, halloysite, kaolinite, montmorillonite, pyrophylite, attapulgite, vermiculite) commonly used to remove for instance calcium from water. NextII, Crystal Right, and ScaleCat, while not preferred, may be combined with a transforming agent to prepare granules of the present invention. These substances are already known in the context of water treatment systems and are safe for use in the context of the present invention. An aluminosilicate binding agent of the present invention may be in the form of a porous granule, including microporous granule, or may initially be present in gel, cement or colloid form. Aluminosilicates are also known as zeolites; over 40 zeolite frameworks are known.

While silver may be included as an additive in the present invention, silver is not a binding agent of the present invention. Also, water is not a binding agent of the present invention. Also, carbon, activated carbon, and/or GAC (granular activated carbon) are not binding agents according to the present invention, although they may be included in transforming media or otherwise included in the system of the present invention.

SiO₂ is a preferred binding agent of the present invention. For instance, where transforming media includes about 80% by weight ZnO, SiO₂ is preferably present in an amount of about 20% by weight of the granules; granules having about 50% ZnO also preferably have about 50% SiO₂; granules having about 90% ZnO also preferably have about 10% SiO₂. In another preferred embodiment, polyvinyl alcohol (PVA) is the binding agent in place of SiO₂ in the above embodiments. Also, other binding agents may be used alone or for instance with SiO₂ or PVA.

A binding agent of the present invention may be one or more of the above substances. Other known binders of inorganic material may also serve as binding agents of the present invention, alone or together with one or more of the above substances.

### Transforming Media

A "transforming media" of the present invention comprises a transforming agent and a binding agent in a combination of about 5-97% by weight of a transforming agent having a low solubility in water with about 3-95% by weight of a binding agent; and optionally includes one or more additives. Ranges of transforming agents and binding agents described in combination with each other throughout this document are all intended as exemplary ranges for a transforming media of the present invention, regardless of form or other details. The combination is preferably about 0.01-100% of the total weight of the media, and for instance 0.1-100%, 1-100%, 10-100%, 25-100%, 33-100%, 50-100%, 75-100%, and 90-100%, depending for instance on the desired form, content, capacity and shelf-life of the media, with the balance (if any) as one or more additives. In one preferred embodiment, the total amount of transforming agent in a transforming media, with or without additives including carbon, is about 5% to 97% by weight, and the total amount of binding agent is 3-97% of the total media. The additives may generally remain discrete, like GAC, or may mix in with the combined transforming agent and binding agent. Overall, the transforming media is intended as material in an anti-scale system containing transforming agent. Generally, materials such as gravel that are layered in the system but do not contain transforming agent are not considered as part of the transforming media. As indicated elsewhere herein, the anti-scale transforming media must allow water to flow through the media, so that transforming agent may be released from the media into the water.

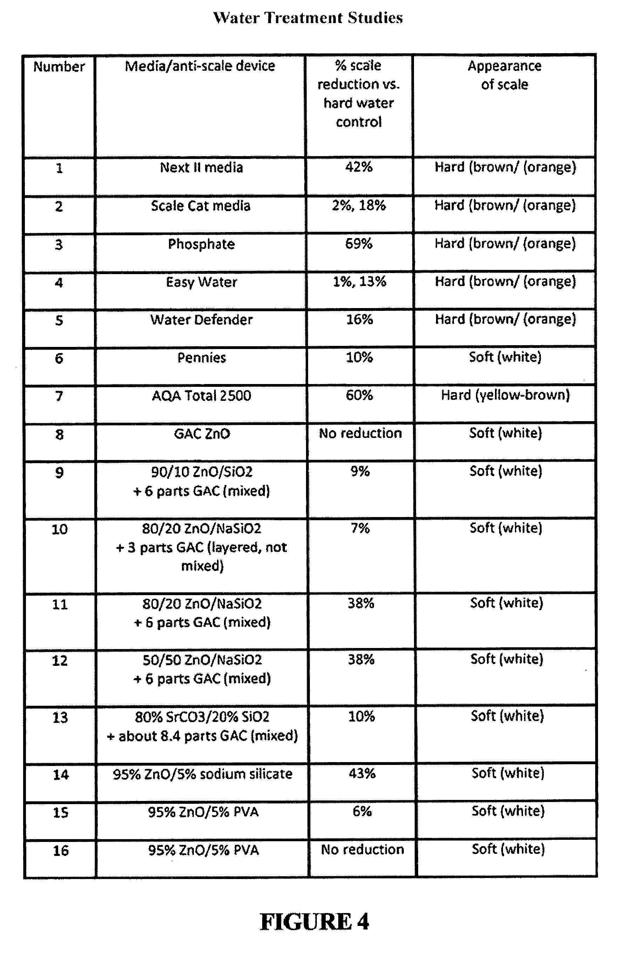

See for instance Figure 4 Number 16, where the combined transforming agent and binding agent (95% ZnO/5% PVA) is 100% of the entire transforming media. See also Figure 4 Number 9, disclosing a transforming media of the present invention having 1 part 90/10 ZnO/SiO₂ granules mixed with 6 parts GAC. "90/10 ZnO/SiO₂" refers to the amount of ZnO and SiO₂ relative to each other in the media. The 90/10 granules were mixed with 6 parts GAC and then used in the water treatment study described therein. The transforming media including GAC was 14% of the 90/10 ZnO/SiO₂ combination by weight (about 12.8% ZnO by weight and 1.4% SiO₂ by weight) and 86% GAC. Preferably, a transforming media of the present invention will have at least 1% binding agent overall, and at least 1% transforming agent overall. More preferably, each will be present in a total amount of composition of at least about 3%.

A transforming media of the present invention may also consist essentially of or consist of about 5-97% transforming agent and 3-95% binding agent by weight, for instance as in other combinations as discussed throughout this application. The transforming media may further include about 0-99.99% by weight of additives in the total composition, for instance about 0-92%, 5-15%, 5-25%, 10-40%, 25-50%, 40-60%, 50-70%, 60-80% and 70-92% of the total composition. The transforming media includes transforming agent, binding agent, and optionally other substances intimately mixed with these agents, including contaminants accompanying one or the other agent and one or more additives. Preferably, a transforming media of the present invention includes at least 1% binding agent and at least 2% transforming agent overall, including all additives.

In the present invention, "a combination of" a transforming agent and binding agent means the transforming agent and binding agent are combined together and the combination is separable, for instance by dissolution of transforming agent in flowing water (preferably, 80-100% of the transforming agent is mechanically separable after forming a combination with binding agent; more preferably 90-100%, 95-100%, and 99-100%). The combination of a binding agent of the present invention with a transforming agent allows the transforming agent to direct CaCO₃ formation into aragonite form and does not change the solubility characteristics of the transforming agent in water outside of the above range(s). The combination does not irreversibly alter the fundamental structure or characteristics of a transforming agent of the present invention, so that the transforming agent cannot direct the formation of aragonite. Rather, the binding agent and transforming agent retain their discrete characteristics. A binding agent preferably binds a transforming agent so that not all of the transforming agent is immediately exposed to flowing water. As the surface of a transforming agent particle gradually dissolves and releases transforming agent into flowing water, underlying transforming agent is exposed, and is also gradually released, until the transforming agent is spent and not enough remains to provide anti-scale effects of the present invention. Preferably, a binding agent is porous, to increase total available surface area of transforming agent to flowing water. For instance, about 20-80% of the surface area of a transforming agent particle alone or on average may be exposed when bound to a binding agent in a transforming granule; also for instance, about 30-70%. See for instance Figure 5, showing exposure of ZnO crystals bound in silicate. As indicated above, the low solubility in water of transforming agents of the present invention allows for self-limiting release from transforming media of the present invention. Preferably, a transforming granule of the present invention allows a binding agent to hold a transforming agent so that the transforming agent may gradually dissolve away from the binding agent in the presence of flowing water. Preferably, in use in a system of the present invention, the binding agent of the transforming media becomes semi-soft and tacky, combining with the transforming agent without wholly encapsulating it. The phrase "a combination of" is not intended to refer to a combination reaction or bear other chemistry-related meanings, particularly where contrary to the present description.

A transforming media may be in the form of a transforming granule, a transforming block, or a transforming fiber or fiber construct such as sheets, wet laid fiber mats and webs, or between or on porous sheets of paper or plastic. The media may be in one of these forms, or may include two or more of these forms. The skilled person will understand that some binding agents lend themselves particularly well to one or another of these transforming media forms. The forms are discussed in more detail below.

A transforming media of the present invention is preferably in solid form, so the combination of binding agent and transforming agent preferably results in a solid composition, for instance by drying and curing as indicated in Example A below. Preferably, the binding agent remains and more preferably stays constant and retains its shape within the transforming media, while the transforming agent slowly dissolves away.

In combining a binding agent and transforming agent according to the present invention to prepare a transforming media (whether in granule, block, fibrous or other form), preferably the binding agent has a melt index that allows heated binding agent particles to form lumps or a matrix with other binding agent particles, and that allows the transforming agent to stick to or otherwise mechanically combine with the binding agent without changing the fundamental characteristics of the transforming agent. Where combining two or more binding agents, preferably all binding agent melt indices are similar enough alone or together to allow the formation of lumps or a matrix under heated conditions and to combine with and hold transforming agent.

Other aspects and embodiments of transforming media are described throughout this document, and may be generally applied here.

### Additives

Other substances may be added to the media of the present invention, to facilitate binding of the transforming agent, strengthen or augment the binding agent or transforming media function or shape, assist in forming a granular, block, fibrous or other media form, and otherwise to obtain desired characteristics. Substances indicated herein as binding agents may be used as additives in the present invention, where another substance combines with the transforming agent of a given transforming media. Fillers commonly used with plastics and polymers may be used. Powdered agglomerate or granulate nano-crystalline anatase may be formed into various flat sheets or composite filter media.

Carbon, activated carbon and/or granular activated carbon (GAC) may be included as an additive in a transforming media, in an amount of about 0-99.99%, for instance about 5 to 90% by weight of the entire media composition; about 10-87%; or about 30-80%. Other preferences with regard to carbon in this application are included throughout this document. In one embodiment, a transforming media may comprise, consist essentially of, or consist of a transforming agent and a binding agent; and optionally carbon, activated carbon, or GAC.

Preferred transforming media according to the present invention include combinations of ZnO and polyvinyl alcohol; ZnO, sodium silicate and GAC; SrCO₃, sodium silicate and GAC; and ZnO, SrCO₃, polyacrylate and sand.

### Transforming Granules

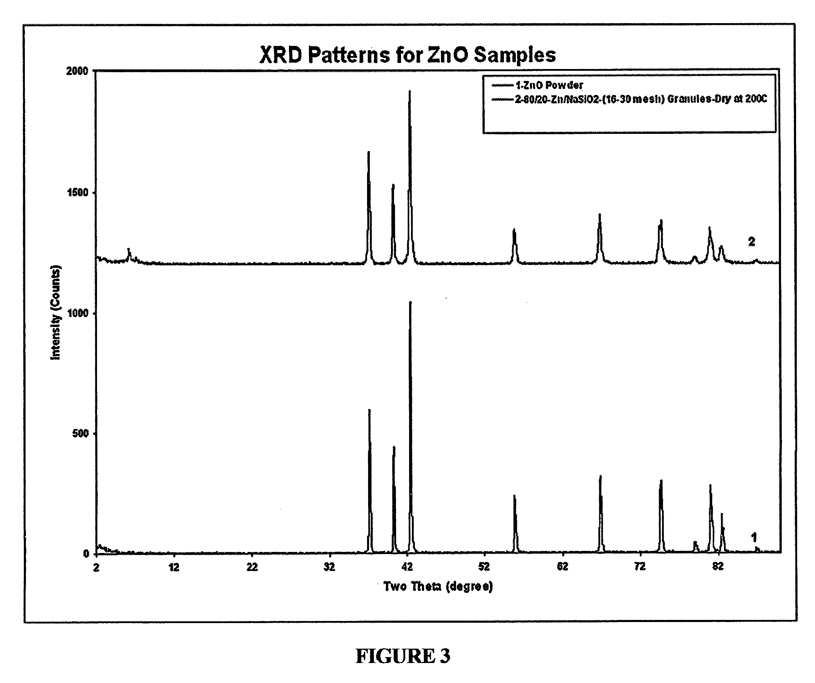

A "transforming granule" of the present invention refers to transforming media in the form of a small, preferably solid, particle, or granule, comprising a combination of a transforming agent and a binding agent. A transforming granule may also consist essentially of or consist of a combination of a transforming agent and a binding agent. A transforming granule is preferably solid or at least is not aqueous, and keeps its shape in flowing water, releasing transforming agents only in small increments over time as discussed throughout this document. Figure 3 shows an XRD pattern of a transforming granule of the present invention, with peaks similar to ZnO powder. See also Figure 4 Numbers 10 and 11, and related Examples.

A transforming granule of the present invention preferably comprises about 5% to about 97% by weight of a transforming agent, more preferably about 47% to about 95% by weight, and most preferably about 65-95% by weight. Also, preferred ranges of a transforming agent in a transforming granule of the present invention are about, by weight: 45-54%; 50-55%; 55-64%; 65-74%; 75%-84%; and 85-97%, alone or in combination. Also, preferred transforming agent amounts in a transforming granule of the present invention are about 50% by weight; about 60% by weight; about 70% by weight; about 80% by weight; and about 90% by weight; more preferably with the balance of the composition (to 100%) made of a binding agent.

Preferably, the balance of a transforming granule of the present invention is a binding agent. The binding agent may comprise a mixture of one or more binding agents. Additives may also be included in or with a transforming granule. Transforming granules may be mixed with other granules such as GAC, to prepare a transforming media. When a transforming granule is mixed for instance with GAC in a transforming media of the present invention, the amount of total transforming agent in the total transforming media composition, including GAC and any other additives, is preferably about 3-33% by weight. The above percentages may refer to the percent by weight of a specific transforming granule, or the average percent by weight of a composition of transforming granules, both above and throughout this document.

The transforming agent in a transforming granule is preferably ZnO alone, SrCO₃ alone, or ZnO and SrCO₃ in a mixture of about 1% by weight ZnO and about 99% SrCO₃, about 5% ZnO and about 95% SrCO₃, about 10% ZnO and about 90% SrCO₃, about 15% ZnO and about 85% SrCO₃, about 20% ZnO and about 80% SrCO₃, about 25% ZnO and about 75% SrCO₃, about 30% ZnO and about 70% SrCO₃, about 35% ZnO and about 65% SrCO₃, about 40% ZnO and about 60% SrCO₃, about 45% ZnO and about 55% SrCO₃, about 50% ZnO and about 50% SrCO₃, about 55% ZnO and about 45% SrCO₃, about 60% ZnO and about 40% SrCO₃, about 65% ZnO and about 35% SrCO₃, about 70% ZnO and about 30% SrCO₃, about 75% ZnO and about 25% SrCO₃, about 80% ZnO and about 20% SrCO₃, about 85% ZnO and about 15% SrCO₃, about 90% ZnO and about 10% SrCO₃, about 95% ZnO and about 5% SrCO₃, or about 99% ZnO and about 1% SrCO₃. Preferably, where ZnO and SrCO₃ are present in a transforming granule, they are present in a mixture of about 1% ZnO-99% SrCO₃, 10%ZnO -90% SrCO₃, 20%ZnO -80% SrCO₃, 30%ZnO -70% SrCO₃, 40%ZnO - 60% SrCO₃, or about 50%ZnO -50% SrCO₃. The above ranges may also apply to other forms of transforming media.

Transforming granules of the present invention may be in a variety of sizes. All particles which allow the free flow of water may be appropriate in the present invention, including for instance from sand size to pieces of centimeter dimensions, under appropriate circumstances. For instance, transforming granules may have an average diameter of about 1 um to about 5000 um; and/or from about 100 um to about 5000 um; and/or from about 200 um to about 5000 um; and/or from about 400 um to about 5000 um; and/or from about 800 um to about 5000 um. Also, transforming granules of the present invention may have an average diameter of about 200 to 2000 um.

Also for instance, at least 50% of transforming agent particles in a composition of transforming granules have an average particle size of about 1 um to about 5000 um; also for instance, from about 1.5 um to about 2000 um; from about 2.5 um to about 500 um, from about 5 um to about 400 um, or from about 10um to about 25 um. See for instance Figure 5, showing SEM photomicrographs of ZnO granules before (unused) and after (used) exposure to flowing water, at 5,000x magnification. Fine particles of ZnO, apparent on the unused granules, were washed away from the granules, leaving only larger ZnO granules, on average 1-2 um wide, visible on the used media. See also Figure 2 Table 2, showing EDX data for 50/50 ZnO/SiO₂ granules before (unused) and after (used) exposure to flowing water. The amount of Zn found in the unused granules is substantially higher than Zn in the used granules.

A transforming media of the present invention may include transforming granules and GAC in a total volume where for every 1 cc (cubic centimeter) of transforming granules present, from 3 to 9 cc of GAC is present. Preferably, from 4 to 7 cc of GAC is present for every 1 cc of transforming granules; more preferably, from 5 to 6 cc of GAC, and most preferably about 6 cc of GAC. However, in other preferred embodiments, the transforming granules are not mixed with GAC or other form of carbon.

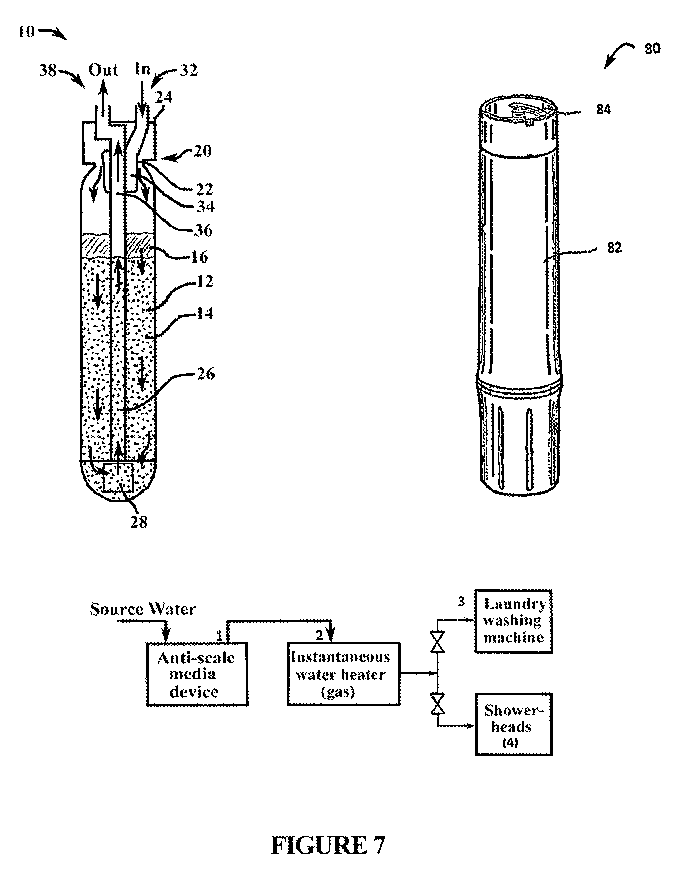

The transforming media in a resin tank of the present invention may be layered with gravel or sand, for instance as shown in the tank of Figure 7. The gravel or sand may be layered above transforming media in transforming granule form, with or without GAC present in the granules, so water passes through the gravel or sand before reaching the granules.

"Bulk density" in the present invention refers to the mass in grams of (dried) transforming granules per cubic centimeter, or average mass in grams of transforming agent per cubic centimeter of granules (transforming agent plus binding agent). Preferably, the measured bulk density is about 0.6 to about 2.2 g; more preferably about 0.7 to about 1.6 g, and even more preferably about 1.5 to about 1.6 g transforming granule / cc transforming granule. In some embodiments, the measured bulk density of transforming granules is preferably about 0.7 to about 0.9 g/cc. Also preferably, bulk density is about 6% to about 50%; about 7% to about 40%; about 8% to about 30%; or about 10% to about 26%, g transforming agent (such as ZnO)/cc granule. For example, the measured bulk density of 90% ZnO/10% SiO₂, described in Example A, is 1.5 g granule/cc granule. Calculated in terms of g transforming agent / cc transforming granule, the bulk density of transforming agent (ZnO) in such granules is 1.5 g/cc x 0.9 = 1.35 g ZnO/cc granule, where the 0.9 represents 90% ZnO in the transforming granule. The 1.35 g ZnO/cc transforming granules of the present invention represent about 24% of the bulk density of ZnO alone.

A "transforming granular composition" of the present invention refers to a collection of granules including transforming granules. Transforming granules of the present invention may individually contain one or more transforming agents. For instance, a transforming granular composition may contain transforming granules having only ZnO as a transforming agent, or granules having only SrCO₃ as a transforming agent. A transforming granular composition of the present invention may also include a mixture of transforming granules having only ZnO and transforming granules having only SrCO₃, so that while an individual transforming granule includes only 1 transforming agent, the transforming granular composition includes both. A granular composition of the present invention may also include transforming granules having a mixture of ZnO and SrCO₃ on the granules themselves. Preferably, a transforming granule of the present invention will have about the same amount of a transforming agent as other transforming granules, so that the average amount of a transforming agent on a given granule is comparable to the average amount of a transforming agent/transforming granule throughout the transforming granular composition.

### Transforming Block

A transforming media of the present invention may be in the form of a block, preferably a carbon block, wherein the transforming agent is combined with a binding agent and optionally mixed with carbon or other substances, then made into a porous block that allows water to flow through and exposes the transforming agent to the flowing water. Fibers such as transforming fibers may run through the block to provide support and additional benefits. Preferably, the block includes at least activated carbon in addition to a transforming agent and a binding agent. The particle size of particles molded into a transforming block or into a paper is preferably about 0.1-50 um. Block sizes may vary with use. For instance, a transforming block intended for an anti-scale water treatment system of this invention, preferably a point-of-use system, may measure about 2 x 2 x 10 inches. Other block dimensions will be readily apparent to those skilled in the art, based on desired use, transforming agent capacity, and shelf life.

Preferably, a transforming block of the present invention comprises about 5% to about 97% by weight of a transforming agent, more preferably about 5% to about 50% by weight, more preferably about 5 to about 30% by weight, more preferably about 5 to about 25% by weight, even more preferably about 5 to about 20% by weight, and most preferably about 5 to about 15% by weight of the entire block. However, lower (or higher) amounts of transforming agent may be used, in keeping with general comments regarding transforming media. Also, a carbon block according to the present invention preferably includes ZnO in the above range, 3-10% binding agent (preferably HDPE), and carbon.

In one embodiment of the present invention, a transforming block may be prepared by combining particles of a transforming agent and a binding agent, in amounts mentioned above, with another particulate material such as granular activated carbon, and then extruding it (with heat and pressure) into a composite block. The transforming block must allow for the flow of water such that transforming agent may be released into the flowing water. Blocks prepared by molding processes are also acceptable for the purposes of the present invention.

A variety of filter blocks are known in the art. Their general preparation methods may be used in preparing the present invention, however, the methods must be modified to include a transforming agent, in combination with a binding agent. See for instance US Patent Nos. 5,189,092; 7,442,301; US 8,002,990; US 7,655,112; US 7,566,014; US 7,276,166; 7,740,141; 7,293,661; and US 5,997,829; for examples of filter blocks known in the art, as well as block-fiber constructs and fibers alone. Each of these documents is incorporated by reference herein, in particular with regard to passages disclosing how to make and use filter blocks, and how to make and use cartridges holding the blocks.

### Transforming Fiber

A transforming media of the present invention may in fiber form; a transforming fiber. A transforming fiber may be, for instance, a cellulosic fiber, entangled with a binding agent combined with a transforming agent, mixed together as discussed above for all transforming media of the present invention. A transforming fiber may also be made from a transforming agent combined with a binding agent of this invention. A transforming fiber may also act as a binding agent for a transforming agent. The transforming media may comprise one or more transforming fiber. Preferably, a transforming fiber of the present invention comprises about 5% to about 97% by weight of a transforming agent, more preferably about 5% to about 50% by weight, and most preferably about 10-30% by weight of the entire transforming fiber, on average or per fiber.

Transforming fibers of the present invention may have different sizes and shapes, as desired for a given use, and may be used alone or with transforming granules and/or blocks or other constructs of this invention, for instance, to aid in the preparation of granules having 90-97% ZnO. Wet laid fiber mats between or on porous sheets of paper or plastic may be used. Nanofibers having a diameter of for instance about 0.1-40 um may be used in the present invention, as may fibers having a diameter of for instance about 0.1 um to about 1000 um, preferably about 0.5 um to about 500 um, more preferably about 10 um to about 300 um, individually or on average. Transforming fibers preferably have lengths appropriate for a given use: for instance, for a point of entry system, fibers are preferably about 1 mm - 40 cm long; for a point of use system, about 1mm - 5 cm long; for a large commercial embodiment, about 1 mm - 1 m long. Preferably, a fiber of the present invention has a length about 2 - 1000 times greater than its diameter.

Fibrillated fibers (having fine tendrils attached to the core of the fiber) may be used in transforming fibers of the present invention, with transforming agent on or combined with the core, tendrils, or both. Fibers (including fibrillated fibers) may be loose, incorporated into fibrous structures such as sheets or membranes, woven into paper for instance as described in US Patent No. 7,655,112 or 7,566,014, prepared with a transforming agent of the present invention in keeping US 7,560,142; each of these patents being individually incorporated herein by reference regarding weaving fibrillated nanofibers into paper using e.g. wet laid paper-making processes; and/or wrapped, layered or further fabricated into forms that allow water to flow through for the purposes of a transforming media of the present invention. The transforming agent may be entangled on the fiber/paper/fiber construct surface or be combined with a binding agent prior to formation of the fibers. Also, a combination of transforming agent and a different binding agent may be entangled onto an existing fiber or combined with a substance and formed into fibers thereafter. In use, the paper must allow rapid and voluminous water flow, and may be positioned in a bed for instance pleated, to maximize exposure of the transforming agent to the flowing water, yet still allow for only the slow dissolution of the transforming agent into the flowing water.

A transforming agent may be combined with a binding agent in fiber form for instance by heating the fiber so that the fiber becomes tacky and holds the transforming agent after cooling. Preferably, at least 50% of transforming agent particles in a transforming media of this invention have an average diameter of about 1um - 25 um. Other methods known in the art may also be used, provided the transforming agent is in combination with the binding agent, that flowing water can pass and transforming agent be released into the water in appropriate amounts, and fulfillment of other requirements of the present invention. In addition to a mixture of transforming fibers with other transforming media, according to the present invention, fibers without a transforming agent may be used to strengthen, support, or enhance transforming media.

Binder fibers in particular include polyethylene, polypropylene, acrylic, nylon, or polyester-polypropylene or polypropylene-polyethylene bicomponent fibers; FYBREL.RTM. synthetic fibers and/or SHORT STUFF.RTM. EST-8, both of which are polyolefin based, may be used. FYBREL.RTM. is a polyolefin based synthetic pulp that is a highly fibrillated fiber and is commercially available from Mitsui Chemical Company, Japan. FYBREL.RTM. has excellent thermal moldability and provides a smooth surface to the filter medium. SHORT STUFF.RTM. EST-8 is commercially available from MiniFibers, Inc., Pittsburgh, Pa., and is a highly fibrillated, high density polyethylene. Fibrillated fibers are preferably made from polymers such as polyamide, acrylic, acrylonitrile, liquid crystal polymers such as VECTRAN ®, ion-exchange resins; engineered resins; cellulose; rayon; ramie; wool; silk; glass; metal; ceramic; other fibrous materials, or combinations thereof. Other methods known in the art may also be used, provided the transforming agent is in combination with the binding agent, that water can flow through/across the transforming media, and that other requirements of the present invention are met. The above substances may also be generally used in other transforming media of the present invention as binding agents.

### Anti-Scale Water Treatment Systems: Point-of-Entry (POE) And Point-of Use (POU)

An anti-scale water treatment system according to the present invention provides for the slow dissolution and release of a transforming agent into water. The system comprises transforming media positioned between a water inlet and a water outlet. In use, the water inlet allows water that is to undergo anti-scale treatment (e.g. water of a water system) to flow through the transforming media, and the water outlet allows treated water to flow away from transforming media and out of the anti-scale water treatment system, for instance rejoin the water system, flow out of a showerhead, and so forth. The water inlet and water outlet are not intended to refer to an entire water system. Rather, the water inlet and water outlet are intended to be near the transforming media, each individually preferably within 10 feet, more preferably within 8 feet, 6 feet, 4 feet, more preferably within 0 to 12 inches of the transforming media, and most preferably within 1 to 9 inches, such that in use water flow is not to be diverted elsewhere. More preferably, the water inlet and water outlet are each part of a tank, cartridge, or other device of the present invention that houses a transforming media. The term "flow through" a transforming media is intended to include water flow through the media (such as granules or a porous block), or over or past the media (such as a plastic sheet with fibers or a fiber construct), so that the water to be treated is exposed to the transforming media to allow for the release of transforming agent into the water in quantities as discussed throughout this document.

More than one transforming media may be positioned between the water inlet and the water outlet. Water flowing between transforming media may be said to enter and leave the media through subinlets and suboutlets. For instance, an anti-scale system comprising three beds of transforming media could include, in sequence, a water inlet, a first transforming media bed, a first water suboutlet, a first water subinlet, a second transforming media bed, a second water suboutlet, a second water subinlet, a third transforming media bed, and a water outlet. In use, water would flow through each in turn. Connections in parallel may also be used, for instance, where water flows through one or more water inlets and then is divided to flow through one of three transforming media beds, the treated water flowing out of the transforming beds may be rejoined into one or more water outlets. In one preferred embodiment, the present anti-scale system has 1 water inlet, 1 bed of transforming media, and 1 water outlet. Where water flows through other water treatment devices before or after flowing through the present anti-scale system, the water inlet and water outlet of the present invention are preferably those closest to the transforming media.

Preferably, an anti-scale water treatment system of this invention treats all water entering a house or other structure through regular plumbing/pipes. Such a system is a "point-of-entry" (POE) or "whole house" system. The anti-scale system suppresses the formation of hard scale and may reduce existing hard scale in plumbing throughout the structure. The anti-scale system is preferably placed near the entry point of water pipes into a building, such as a residential, commercial or mixed use building. See for instance Figure 7 (lower right schematic diagram), illustrating a point of entry system of the present invention, where "1" is the entry point of water pipes into a building. Preferably the POE system is for entry into a residential building, more preferably a single-family home. The anti-scale system may comprise a stand-alone cartridge or tank housing transforming media, or comprise part of a hybrid or more comprehensive water treatment system, for use in combination with other water treatment systems. Examples of such water treatment systems are known in the art.

A point of entry anti-scale system is preferred in the present invention because it helps protect all of the plumbing in the building by treating source water having hardness before the water temperature increases as it enters the house and heating or other water system equipment therein. Preferably, the POE system is positioned before water flows into a water heater that will heat water for the building; also preferably, the anti-scale system is located along a main water line entering a building. As water-bearing pipes emerge from underground, which tends to be cooler than temperatures above ground, the temperature of water in the pipes will likely gradually increase. If heated by a water heater, the temperature will greatly increase. As mentioned above, the solubility of scale-forming CaCO₃ in water decreases with increasing temperatures. This means that solubilized CaCO₃ is more likely to crystallize out of water and deposit into hard scale (or any scale) once water enters a building. The POE system is preferably positioned to direct calcium carbonate to form aragonite prior to an increase in water temperatures in pipes, or at least prior to a substantial increase in water temperatures in pipes. For instance, the temperature of water in underground pipes and of water that flows through a POE system of the present invention may increase 5-10C when entering the building. Water entering the building passes through the point of entry device before branching off to for instance various rooms in a house where running water is desired, and equipment such as a water heater. By transforming CaCO₃ into aragonite form before pipes carrying water narrow, fewer plumbing surfaces will accumulate hard scale.

The transforming agent must be accessible to the flowing water in order to release into the water at or near full solubility. The transforming agent should not be too large or bound such that kinetics are impeded at low residence (contact) time; contact between flowing water and transforming media may be as little as 1-3 seconds when an anti-scale system of the present invention is in use, however, residence time may be much longer, such as several (e.g. 2-4) minutes or overnight. The transforming media is static - other than simply releasing a transforming agent over time, the media is preferably not fundamentally altered during the course of its use. If present, carbon such as GAC may become saturated over time, but preferably is not recharged or replaced throughout the life of the transforming media of this invention. The present invention is expressly not a zinc anode or galvanic device, not an anti-scale ion exchanger requiring recharging with salt, is not polyphosphate-based, and does not require any other mechanism other than transforming media between a water inlet and outlet to provide anti-scale effects. The effect of the present invention may vary between new buildings (focusing on suppressing hard scale buildup) and old buildings (focusing on suppressing and potentially helping remove hard scale buildup).

Point of use systems may also be used to achieve anti-scale effects according to the present invention. For instance, a cartridge having a bed containing a transforming media and a binding agent may be positioned near or within, for instance, a water heater, dishwasher or showerhead, to suppress hard scale formation in these appliances. Such point of use devices will be particularly useful if placed upstream from a heating element, to ensure a fresh supply of transforming agent is available to direct aragonite formation before water is heated and calcium carbonate crystallizes out of solution. See for instance Figure 7 (lower right schematic diagram, and ignoring point "1"), illustrating a point of use anti-scale system of the present invention, where points "2" and "3" are preferred positions for the anti-scale media device. Preferably, a rinsing or sheeting agent including for instance a chelating agent and a nonionic surfactant (such as Jet Dry®) is used in dishwashers in conjunction with water exposed to transforming media of the present invention.

As discussed above, transforming agent release according to the present invention is based on equilibrium dynamics (dissolution of a transforming agent such as ZnO up to equilibrium in non-acidic water). When the ZnO is depleted, anti-scaling effects end. Preferably, in the present invention, a transforming agent is dosed into flowing water at a rate of about 10 % to 100% of its equilibrium solubility in water. To provide an anti-scale effect of the present invention, preferably transforming agent release occurs in an amount of at least 0.05 mg/L water, preferably at least 0.1 mg/L water. For instance, ZnO is preferably dosed into flowing water in an amount of about 0.1 to about 1.9 mg/L, preferably about 0.2 to about 1.8 ppm, more preferably about 1 to about 1.8 ppm, more preferably about 1.5 to about 1.7 ppm, and most preferably at about 1.6 ppm, on average over a period of time or at a specified time/volume. Preferably, the amount of CaCO₃ in water to be treated by this invention is 50 ppm to 20,000 ppm, more preferably 100 ppm to 5000 ppm and more preferably 100 ppm to 1000 ppm. To avoid a need for measuring amounts of CaCO₃ in water to be treated, an anti-scale system of the present invention is typically designed to treat a given volume of water, as indicated in calculations below. It is to be understood that amounts of transforming agent in a cartridge may be adjusted according to various needs, such as treatment of a given volume of water, and desired life-span of a system.

An anti-scale system of the present invention preferably can suppress hard scale formation in up to about 1,000 to up to about 2 million gallons of water. More preferably, an anti-scale system can suppress scale in about 500,000 - 1.6 million gallons of water, and most preferably, about 1.5 million gallons of water. An anti-scale system may provide scale suppression for about 1 month - 10 years, preferably 3 months - 8 years, more preferably 6 months to 6 years, depending on desired lifetime and size of the system.

A point of entry anti-scale system of this invention, based on average household water usage of 300 gallons per day, may provide anti-scale treatment in 200,000 to 2 million gallons of water, and will preferably last about 2 months to about 3 years. A point of use system, having more variable usage, preferably will provide anti-scale benefits according to the present invention for 3 months to 10 years, with the ability to treat 100-1000 or more gallons of water. For industrial uses and high-volume anti-scale water treatment, an anti-scale system of the present invention preferably will last 6 months to 5 years, more preferably 1-3 years.

Preferably, scale formed after treatment with the present invention is aragonite scale, and total scale formation as compared with a hard water control will be reduced by 0-100%, and for instance 0-60%, 15-45%, 5-50%, and 10-40%.

Other aspects and embodiments of the anti-scale system are described throughout this document, and may be generally applied here.

### Cartridges, Tanks and Beds

Preferably, the water inlet, transforming media and water outlet are all contained within a device such as a cartridge or tank (see Figure 7). Preferably, the device is compatible with and connectable to a water system - that is, it is of a proper size, shape and construction for water system pressure and flow, and has proper connections to allow water in the water system to flow into and out of the water inlet and outlet. A bed within a device of the present invention is the part of the device that houses transforming media of any form. The volume of transforming media, water, and other parts or aspects of the present invention that a device may hold will vary based on its desired use, for instance as discussed with regard to desirable media volumes, above.

A cartridge is preferably removably attached to a base attached to part of the water system, for instance so that the cartridge, or bed within, may be removed once the transforming media is spent, and easily replaced with fresh transforming media. The interior portion of the cartridge including the bed is sized and shaped to accommodate transforming media amounts, volumes and forms for its intended use, as well as desired additives. For instance, POE uses will typically require more transforming media than POU uses such as at a showerhead. See Figure 7 (upper right), showing an exterior view of a cartridge 80 that may be used in the present invention, having a water inlet and water outlet (not pictured), a cylindrical body 82 for housing transforming media, and a connector 84 for connecting the cartridge to a water system. Further views of the cartridge may be seen at US Design Patent No. D547,825 S, incorporated herein by reference in particular for such purpose.

A device of the present invention may be a tank for instance as described in US 7,297,264, incorporated by reference herein and in particular with regard to descriptions of making and using the tank. The tank may be positioned as a POE or POU device, or modified as a hybrid water treatment system incorporating an anti-scale system of this invention. As the present invention does not require salt treatment, brine valve and other such parts described in US 7,297,264 are optional in the present invention. See Figure 7 (left), wherein cartridge 10 of the present invention includes a resin tank 12 holding transforming media (preferably in granule form) 14 of the present invention. A layer of gravel and sand 16 is optionally present above the transforming media. The resin tank includes an upper opening 20 wherein a top distributor 22 and a valve controller 24 are secured. A pipe 26 extends from the top distributor 22 down to a bottom distributor 28 located in the transforming media 14. Water flow direction while the cartridge 10 is in use is indicated by arrows; water flow may also occur in the reverse direction (not shown). The cartridge 10 includes a water inlet 32, preferably for receiving hard water in use. The hard water enters the valve controller and then the top distributor via a first fluid channel 34, and then enters the tank. As the water flows through the transforming media, transforming agent is released into the water. The treated water enters the bottom distributor 28 and flows up the pipe 26 and through fluid channel 36. The treated water then enters the valve controller and exits via a water outlet 38. The treated water preferably reenters a water system, for use or storage. The benefit of treated water of the present invention may extend beyond the water system, for instance, as water heated in tea kettles, humidifiers, and other equipment may retain the benefit of the transforming agent. As the temperature of the treated water increases and CaCO₃ crystallizes out of solution, the transforming agent present in the treated water will direct formation of aragonite, thereby suppressing the formation of hard scale in the water system or end use device. The top distributor or other parts of the cartridge may include one or more screens (for instance at the water inlet 32, water outlet 38 and/or bottom distributor 28) to prevent media and other particulate matter from entering the cartridge or the water system.

An anti-scale system of the present invention may include any conventional cartridge or bed that holds the transforming media and allows water to flow through at a desired volume and rate. Several cartridges known in the art are mentioned above in the discussion of transforming blocks, and also include US RE37,216; US 5,700,371 and US 7,442,301. Each of these 3 patents, in addition to those discussed with regard to transforming blocks above, are incorporated by reference herein with specific regard to information relating to cartridges used to hold media in water treatment systems. A cartridge and/or bed may be removable, so for instance a bed and/or cartridge having spent media may be removed and replaced with a fresh bed and/or cartridge. Also, media may be removed from the bed and cartridge, and replaced when for instance the media is spent and no longer able to provide anti-scale effects.

ZnO concentration may also be affected by tank size and contact time (for instance, media bed depth).

### Methods of Preparing Transforming Media and Anti-Scale Systems

Transforming granules and blocks may be and are preferably prepared by the following steps:
1. Combining appropriate amounts of transforming agent and (uncured) binding agent, preferably by stirring, mixing, kneading or other known methods of combining substances, and then
2. Heating the granules to 100°C-200°C, or higher temperatures as may be needed or desired to cure the binding agent;
3. Optionally drying, preferably with heat, if and as needed, with temperatures appropriate for the materials used; and/or Optionally rinsing with water or mild acid;
4. And then, optionally grinding the cured combined transforming agent and binding agent into granules and sizing as desired (preferably 150-1000 um for granular compositions, 1-100, 50-100 um for agglomeration into block media), preferably by known methods such as hand grinding, pin mixing, and so forth; and
5. Finally, optionally, to prepare block media: extruding or molding the transforming granules into blocks of a desired shape or size.

### Examples

The following Examples describe the preparation and use of transforming media of the present invention. The Examples are meant to illustrate embodiments of the present invention, but are not meant to be construed as limiting.

### Example A: Preparation of Acid Treated 90% ZnO / 10% SiO₂ Transforming Granules

Acid Treated 90% ZnO / 10% SiO₂ Transforming Granules of the present invention were prepared as indicated in the below steps:
(1) Combining 468.75 g of sodium silicate (n-brand 29% SiO₂, 9% Na₂O; uncured) with 1500 g of ZnO powder by stirring until homogeneously combined and then kneading the combination by hand until a semi-solid dough formed.
(2) Drying the dough at 100°C in a forced air oven overnight to form a solid mass of sodium-silicate-bound ZnO weighing approximately 1.75 Kg.
(3) Grinding by hand the solid mass of sodium silicate bound ZnO (ZnO/SiO₂) into granules and sizing the granules to the size of 16-30 mesh (1190-595 um) by screens. Approximately 1.40 Kg of these granules were collected and further processed.
(4) Heating the granules in a forced air oven at 100°C for 1 hour and then 200°C for an additional 1 hour to cure or set the silica binding agent.
(5) Immersing the granules into a solution of 500g HCl (1N) and 500 g de-ionized water at room temperature overnight.
(6) Decanting the granules twice, and then putting the granules into an additional solution of 500 g HCl (1N) and 200g de-ionized water at room temperature for 6 hours. Washing the granules with mild acid removes sodium and other salts that may be present from the granules.
(7) Decanting the granules two additional times with de-ionized water and then soaking at room temperature overnight in 1L of deionized water.
(8) Rinsing the granules with deionized water several times, and then drying at 100°C for 5 hours.
(9) Heating the granules at 200°C for 1 hour.
(10) Approximately 1.25 Kg of finished product was obtained. 800 cc = 1.2 Kg. Bulk density as measured is 1200g granules/ 800 cc granules = 1.5 g granule/cc. The bulk density of ZnO in 90% ZnO granules is calculated as 1.5 g granule/cc x 0.9 = 1.35 g ZnO/cc.

The above describes the preparation of the transforming granules used in water treatment studies discussed with regard to Figure 4 Number 9. Other samples indicated in Figure 4, Numbers 8, 10-13, were prepared in similar fashion, with different percentages of components, or (No. 13) with strontium carbonate in place of zinc oxide.

While transforming granules such as the above may be treated with mild acid, as a general rule, the use of strong acid should be avoided when preparing or using transforming media of the present invention, as the acid may degrade the ZnO or other components and hinder the usefulness of the transforming media.

### Example B: Preparation of Transforming Media

Transforming granules made in Example A were mixed or layered with granular activated carbon (GAC), as indicated in Figure 4 Numbers 8-13. Transforming granules were salt and pepper mixed with the GAC (i.e. granules were mixed with GAC so as to be evenly distributed throughout the mixture). The transforming granules were not physically attached to the GAC but were allowed to remain as loose granules.

### Example C: Preparation of POE cartridge, and water treatment studies

Transforming media was placed in a standard water filtration cartridge that may hold up to 750 cc media and which prevents the escape of granules as water flows through a water inlet, transforming media and water outlet. Anti-scale water treatment tests were generally conducted as follows (unless indicated otherwise in Figure 4 and related discussion below):
1. Hard water (Woodbury, Minnesota municipal water, about 15-16 grains hardness) was run through 750 ml transforming media (750 ml granules including salt and pepper mixed GAC, unless indicated otherwise), other media or other devices as shown in Figure 4 Nos. 1-13, and into a downstream water heating chamber with a hot filament. During a cycle, 1/3 of the water in the heating chamber was replaced with water that was run through the upstream media bed.
2. The water in the heating chamber utilized a thermocouple and electric heating element to maintain the water temperature at 140°F (similar to a residential water heater).
3. A water exchange cycle occurred every 30 minutes for the duration of the testing.
4. Testing was scheduled to last for 14 days, for a total of 672 cycles and 480 gallons of water (about 0.7 gallons of water per cycle). This is long enough to accumulate significant amounts of scale, but not so long that the heater element burns out on the untreated control test.
5. After the test was completed, the water from the tanks was drained and scale buildup on the heater and in the chamber measured by weight.
6. An untreated control station was used for comparison testing. This station used the same source for hard water, same fill pattern, same time duration, and same heating chamber design as the anti-scale test media. The tests were run side by side. The scale from the hard water control chamber was also captured and measured in the same manner as the test media chamber.
7. After the testing was complete, a scale build-up comparison was made between select treated and untreated results to determine the effectiveness of the transforming media.

Scale formed on the filament and in the chamber as an artifact of calcium carbonate being less soluble in hot (vs. cold) water. Scale is observed for quantity, color and appearance. Select scale and spent media samples were analyzed for analysis of phase (by x-ray diffraction, XRD), micro size and form (by scanning electron microscopy, SEM) and/or elemental surface composition by EDX.
The present ZnO granules did not reach equilibrium in all cases. After exposure to ½ of the 480 gallon volume for the media described at Figure 4 No. 9, 0.1-0.2 ppm ZnO was released from media (data not shown). ZnO releases from SiO₂ in the presence of flowing water in a slow, steady way that is relatively independent of water pH and other characteristics.

Analysis of 480 gallon treated samples revealed low zinc loss from such media. SEM photomicrographs show that large ZnO particles remain after use, presumably allowing the slow dissolution of ZnO, limited by its low water solubility, for anti-scale purposes. Anti-scale lifetime determines the practicality of fixed bed media in such applications, especially for whole house systems of the present invention.

### Example D- Preparation of 95% ZnO / 5% Binding Agent Transforming Granules

Transforming granules were made as indicated in the following steps:
1. Combining 3 gallons (25 pounds) of a 10% by weight polyvinyl alcohol (PVA) solution with 53 pounds ZnO (5% moisture) to produce a slurry having 5% by weight PVA and 95% ZnO.
2. Introducing the slurry into a small pilot pin mixer, with heat and pressure applied in keeping with characteristics of the binding agent(s) and transforming agent(s).
3. Drying the resultant product at 100-200°C to form transforming granules. Measured bulk density: 1.6 g 95/5 transforming granule/cc 95/5transforming granule.

Transforming granules were also made with sodium silicate instead of PVA. Examples of transforming media prepared according to Example D are described as Numbers 14-16 at Figure 4.

### Example E - Preparation of Anti-Scale Cartridge

400 ml transforming granules prepared as in Example D were placed on top of gravel and sand in a cartridge. The cartridge inlet was positioned below the gravel and sand, so water flowing into the cartridge first encountered gravel and sand, and then transforming granules. No carbon or GAC or other substances were added to the granules or the cartridge. These cartridges were used in the water treatment studies described at Numbers 14-16, Figure 4.

### Example F - Water Treatment Studies

Cartridges prepared as in Example E with transforming media described in Figure 4 Nos. 14-16 were placed upstream from a water heater.
1. Hard water TDS (total dissolved solids) before exposure of water to granules was 264 ppm. Hard water was run through the cartridges, having 400 ml 95/5 ZnO/binding agent granules, and then into a heating chamber (0.92 gallon) with a hot filament. 540 cycles of water were run with an 8 hour dwell time, 16 hour cycle time, and exchange cycles of a 2 min fill and 28 min dwell. The heater wattage was 1500 and watt density was 62 W/in².
2. During a cycle, 1/3 of water in the heating chamber was replaced with water that was run through the upstream media bed.
3. The water in the heating chamber utilized a thermocouple and electric heating element to maintain the water temperature at 140 F (similar to a residential water heater).
4. A water exchange cycle occurred every 30 minutes for the duration of the testing.
5. Testing was scheduled to last for 14 days, for a total of 540 cycles and about 500 gallons of water (about 0.92 gallons of water per cycle). This is long enough to accumulate significant amounts of scale, but not so long that the heater element burns out on the untreated control test.
6. After the test was completed, the water from the tanks was drained and scale buildup on the heater and in the chamber measured by weight.
7. An untreated control station was used for comparison testing. This station used the same source for hard water, same fill pattern, same time duration, and same heating chamber design as the anti-scale test media. The tests were run side by side. The scale from the hard water control chamber was also captured and measured in the same manner as the test media chamber.
8. After the testing was complete, a scale build-up comparison was made between select treated and untreated results to determine the effectiveness of the transforming media.

Scale formed on the filament and in the chamber as an artifact of calcium carbonate being less soluble in hot (vs. cold) water. Scale is observed for quantity, color and appearance. Select scale and spent media samples were analyzed for analysis of phase (by x-ray diffraction, XRD), micro size and form (by scanning electron microscopy, SEM) and/or elemental surface composition by EDX.

### Example G: Zinc Release Into Flowing Water

The concentration of zinc in water treated with the anti-scale systems described in Figure 4 Numbers 14-16, according to the water treatment studies described in Example F, was measured by ICP-MS total quantitative analysis (sensitivity: below one part per trillion):

**Water sample taken in the middle of the 2 week test:**

| dissolution | Amount of zinc in treated water | Amount of zinc minus HW | % eqb. control |
|---|---|---|---|
| Hard water (HW) (control): | 0.153 ppm | | |
| Figure 4 No. 14 (95%ZnO/5% SiO₂, 8x25 tank): | 1.6638 ppm | 1.510 ppm | 94% |
| Figure 4 No. 15 (95%ZnO/5% PVA, 8x25 tank): | 1.7087 ppm | 1.555 ppm | 97% |
| Figure 4 No. 16 (95%ZnO/5% PVA, 9x40 tank): | 1.8185 ppm | 1.665 ppm | 104% |

These data show a ZnO dissolution rate at approximately 93-104% of equilibrium kinetics (for ZnO, 100% = 1.6 ppm, or 1.6 mg/L), in keeping with the present invention.

**Water sample taken at the end of the two week test:**

| dissolution | Amount of zinc in treated water | Amount of zinc minus HW | % eqb. control |
|---|---|---|---|
| Hard water control (HW): | 0.032 ppm | | |
| Figure 4 No. 14 (95%ZnO/5%SiO₂, 8x25 tank): | 1.1738 ppm | 1.142 ppm | 71% |
| Figure 4 No. 15 (95%ZnO/5%PVA, 8x25 tank): | 1.8354 ppm | 1.803 ppm | 112% |
| Figure 4 No. 16 (95%ZnO/5% PVA, 9x40 tank): | 1.8922 ppm | 1.860 ppm | 116% |

These data show a ZnO dissolution rate of approximately 71-116% of equilibrium kinetics (for ZnO, 100% = 1.6 ppm, or 1.6 mg/L), in keeping with the present invention.

The amount of zinc in water treated with an anti-scale system of the present invention indicates ZnO release into flowing water at approximate equilibrium kinetics expected based on ZnO water solubility. Over time, zinc release from the sodium silicate binder sample appeared to diminish somewhat, and zinc release from the PVA binder samples to increase a little.

### Example H Dishwashers, Laundry Washing Machine and Showerheads

As shown in Figure 7 (lower right), two 8x10 resin tanks were filled with 6 pounds gravel, 5 pounds filter sand and 4L of 95% ZnO/5% sodium silicate transforming granules prepared as in Example D above. No GAC/carbon was added to the tanks. For the purposes of this Example, points "1", "2" and "3" shown on the diagram are disregarded.

Each tank was connected to a GE Model GN75DNSR5A instantaneous gas water heater, commonly used in residences. Over a 30 day span, water flowed through one of the tanks and then the water heater, and then through 4 showerheads (Delta Model RP38357; maximum flow, 1.25 gallons per minute) and a dishwasher (Kitchen Aid KUDC1DIX, averaging 6 gallons/cycle), connected as indicated in Figure 7 (lower right), with a dishwasher in place of a laundry washing machine. 6,118 gallons of water flowed through the dishwasher, and 1304 gallons of water flowed through each of the 4 showerheads (5216 gallons for all), so that 11,334 gallons of water flowed through the media and the water heater, and into the dishwasher and showerheads.

Over a 30 day span, water flowed through the other tank and then the water heater, and then through 4 showerheads (Delta Model RP38357; maximum flow, 1.25 gallons per minute) and a laundry washing machine (GE Model GTWN425OMW5, 22.4 gallons/cycle, connected as indicated in Figure 7 (lower right). 9814 gallons of hot water and 2709 gallons of cold water (12,513 gallons hot/cold) flowed through the laundry washing machine, and 1870 gallons of water flowed through each of the 4 showerheads (7480 gallons for all), so that 19,993 gallons of water flowed through the media and the water heater, and into the laundry washing machine and showerheads.

Results: Scale inside showerheads, the laundry washing machine and the dishwasher was predominantly in aragonite form after water flowed through transforming media of the present invention. Clothing in laundry machines appeared bright compared with clothing washed in a control device without exposing water to transforming granules, possibly as the anti-scale treatment reduced or eliminated small dark calcite/magnesium deposits on clothing.

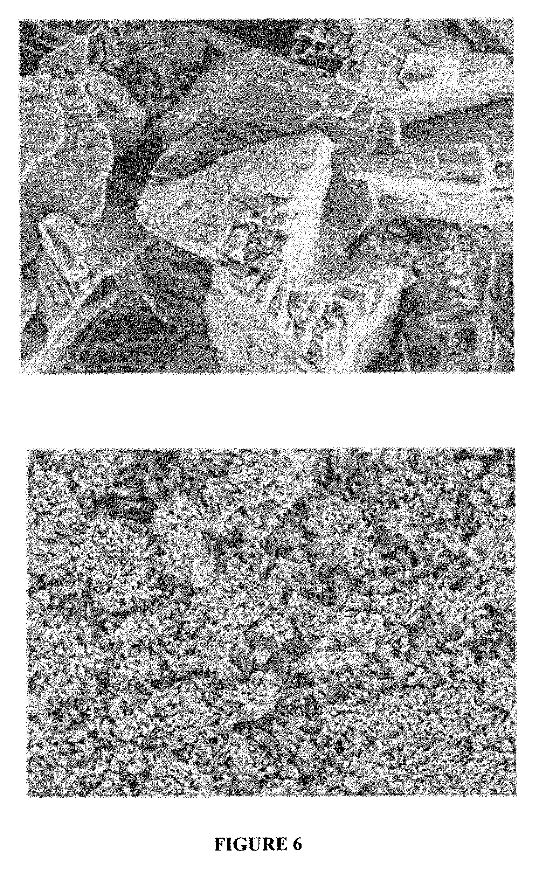

Figure 6 (top) shows an SEM photomicrograph at 5000x magnification of scale taken from a showerhead exposed to flowing water but not to a transforming media of the present invention. The scale has the blocky appearance of the calcite crystalline form of calcium carbonate. Figure 6 (bottom) shows scale taken from a showerhead exposed to flowing water, after flowing the water through an anti-scale system as described in Figure 7 (lower right). The scale has the needle-like appearance of the aragonite crystalline form of calcium carbonate.

These results show embodiments of the present invention that release ZnO in amounts sufficient to suppress hard scale formation and deposition in accordance with the present invention.

### Further Water Treatment Study Results and Comparative Examples

In other comparative tests, Figure 4 Numbers 1-5, 7 show state of the art anti-scale devices that, while reducing total scale to varying degrees, still result in the formation of undesirable orange-brown hard, calcite scale. Tests on these devices were run as outlined as in Example C. A Zinc anode (copper cathode) system suppressed scaling, however, zinc was depleted too quickly in the presence of copper. As copper pipes may be used in homes, the use of zinc anode systems with copper pipes may result in elevated, unsafe zinc levels.

Figure 4 Numbers 9-16 show transforming media of the present invention that suppress hard scale formation by (1) directing formation of aragonite-based, white "soft scale" and to varying degrees preferably (2) decreasing formation of total scale. Granules used to prepare transforming media of the present invention described in Numbers 8-13 of Figure 4 were prepared according to the procedure described in Examples A-C above, and Numbers 14-16 according to Examples D-F, with variations in transforming agent and binding agent compositions and amounts to prepare combinations such as 50/50, 80/20, 90/10 and 95/5% transforming agent/binding agent granules.

Data for each device or media in Figure 4 is compared to the hard water control run concomitantly with the given test. Water was sourced from Woodbury, Minnesota city water service. Hard water control experiments did not use any media or other anti-scale device.

Figure 4 Number 1 used Next II media made by Next Filtration Technologies Inc. (Lake Worth, FL). This media is a commercial template crystallization, calcite-release media, made with aluminum silicate as shown for instance in Figure 2 Table 1. Figure 4 shows that Next II media achieves good reduction of total scale formation but still results in the formation of substantial amounts of hard scale. 3 experiments with Next II showed a 47%, 42%, 37% reduction of total scale; 42% reduction in total scale on average. Furthermore, the media is not particularly long-lasting.

Number 2 used Scale Cat media made by Southeastern Filtration Equipment Systems (Canton, GA). This media is a commercial template crystallization, calcite-release media, made with aluminum silicate as shown for instance in Figure 2 Table 1. Figure 4 shows that this media achieved far less reduction (2%, 18%) of scale formation than Next II media, and resulted in the formation of substantial amounts of hard scale. Furthermore, the media is not particularly long-lasting.
Number 3 used phosphate. Figure 4 shows that this media achieved substantial reduction of total scale (69%), but still resulted in the formation of hard scale. The use of phosphates to reduce scale formation is known in the art, but presents difficulties that make the identification of other anti-scale compositions desirable.

Numbers 4, 5 and 7 used electromagnetic devices with varying degrees of success in reducing total scale. Numbers 4 and 5 included coils wrapped around copper pipe. Hard scale formation was seen as a result of each text.

Number 6 used 800 halved pennies as a copper-based anti-scale media. Specifically, 800 ml halved pennies were mixed with 4800 ml GAC, and then poured over a bedding of gravel and sand. Carbon fines were flushed prior to test. 10% reduction of total scale was found by this treatment.

Number 8: The requirement for a binding agent in the present granules is emphasized with the results of this test. With no binding agent present, ZnO was released early in the test, plugging the system and causing a cloudy buildup inside the water tank wall. Aragonite scale was produced, although no reduction in total scale occurred when compared with the hard water control.

Figure 4 Numbers 9-16 include transforming media of the present invention. Water treatment studies were performed as in Example C for Nos. 9-13, and as in Example F for Nos. 14-16.

Number 9: Scale suppression was seen both in the reduction of total scale (9%) and the characterization of such scale as aragonite after treatment with this transforming media.

Number 10: 100 ml transforming granules were layered with 3 parts (300 ml) GAC on top. The media bed was stratified, not mixed. Transforming granules were not heat treated prior to use. Scale suppression was seen both in the reduction of total scale (7%) and the characterization of such scale as aragonite after treatment with the transforming media of the present invention disclosed Figure 4 Number 10.

Number 11: 800 ml 80% ZnO/20% NaSiO₂ transforming granules were mixed with 4800 ml (6 parts) GAC; poured over a bedding of gravel and sand. Carbon fines flushed prior to test. Scale suppression was seen both in the reduction of total scale (38%) and the characterization of such scale as aragonite after treatment with the transforming media of the present invention disclosed in Figure 4 Number 11.

Number 12: 800 ml 50% ZnO/50% NaSiO₂ transforming granules were mixed in a salt-and-pepper style mixture with 4800 ml (6 parts) GAC. Gravel and sand were also layered in the cartridge. This test ran only 602 cycles but the hard water control ran 652 cycles; % scale reduction adjusted accordingly. Scale suppression was seen both in the reduction of total scale (38%) and the characterization of such scale as aragonite after treatment with the transforming media of the present invention disclosed in Figure 4 Number 12.

Number 13: 800 ml 80% SrCO₃/20% SiO₂ transforming granules were mixed with about 8.2 parts GAC and introduced into a cartridge for anti-scale testing. Scale suppression was seen both in the reduction of total scale (10%) and the characterization of such scale as aragonite after treatment with the transforming media of the present invention disclosed in Figure 4 Number 13. The scale had a barnacle appearance, somewhat different from the flaky appearance seen with ZnO treatment, and may have a little hard scale present.

Numbers 14-16 were run at the same time, with a hard water control. Overall in terms of scale reduction, ZnO with the sodium silicate binder performed better than PVA binder samples. Scale accumulation of both PVA materials was less than hard water, but more than sodium silicate.

Number 14: 400 ml 95%/5% by weight ZnO-sodium silicate media was layered on top of sand and gravel in an 8 x 25 tank. Flow direction was up-flow, so water passed through sand and gravel first, media after. Soft, white, aragonite-type scale was seen after water treatment, consistent with the look of aragonite scale found in previous ZnO testing, and in contrast to a yellow-brown hard scale hard water control. A substantial reduction in total scale found in the heater was seen as well.

Number 15: 400 ml 95%/5% by weight ZnO-PVA (polyvinyl alcohol) media was layered on top of sand and gravel in an 8 x 25 tank. Flow direction was up-flow, so water passed through sand and gravel first, media after. Soft, white, aragonite-type scale was seen after water treatment, consistent with the look of aragonite scale found in previous ZnO testing, in contrast to a brown hard scale hard water control.

Number 16: 400 ml 95%/5% by weight ZnO-PVA (polyvinyl alcohol) media was layered on top of sand and gravel in a 9 x 40 tank. Flow direction was up-flow, so water passed through sand and gravel first, media after. Soft, white, aragonite-type scale was seen after water treatment, consistent with the look of aragonite scale found in previous ZnO testing, in contrast to a brown hard scale hard water control.

Overall, when hard water is exposed to ZnO, it forms aragonite scale no matter what binding agent has been used. The binding agent may impact ZnO concentration and the degree of scale reduction. ZnO concentration may also be affected by tank size and contact time (for instance, media bed depth).

The present invention may be used on its own; no other anti-scale or other water treatment devices are needed. The present invention may be used with other anti-scale devices, in particular calcite seeders, mechanical scrubbers or high pressure streams, chemical treatments such as acid or phosphate treatments, and so forth. The present invention may also be used with other water treatment devices.

## Claims

1. A transforming media in the form of a transforming granular composition, comprising:
a combination of about 5-97% by weight of a transforming agent that directs the crystallization of calcium carbonate into aragonite form in flowing water, said transforming agent having a solubility in water of about 0.1 to about 50 mg/L; and about 3-95% by weight of a binding agent;
and optionally an additive;
wherein said composition has a calculated bulk density (grams transforming agent/cc transforming granule) of at least 6% that of the bulk density of the transforming agent; and
wherein at least 50% of transforming agent particles in the transforming granules have an average particle size of about 1 um to about 5000 um.

2. The media of claim 1, wherein said combination includes about 50-97% transforming agent and about 3-50% binding agent.

3. The media of claim 1, wherein said transforming agent is at least one of ZnO and SrCO₃.

4. The media of claim 1, wherein said binding agent is at least one of sodium silicate, calcium silicate, ammonium silicate, potassium silicate, colloidal silicate, calcium sulfate, sodium sulfate, polyvinyl acetate, polyvinyl alcohol, polyvinyl pyrrolidone, hydroxyethyl cellulose, polyethylene, polyacrylate, polyolefin and latex.

5. The media of claim 1, wherein said transforming granular composition has a measured bulk density of about 0.5 to about 3 g transforming granule per cc of transforming granular composition.

6. The media of claim 1, wherein said combination is about 0.01-100% of the total weight of the transforming media, and said additive is about 0-99.99%.
